# EUROPEAN PATENT APPLICATION

(11) **EP 1 455 506 A1**
(43) Date of publication of application: **08.09.2004**
(21) Application number: 02783740.0
(22) Date of filing: 02.12.2002
(51) Int. Cl.: H04M 1/247

(54) **CELLULAR TELEPHONE**

(30) Priority: 13.12.2001 JP 2001380035
(71) Applicant: MATSUSHITA ELECTRIC INDUSTRIAL CO., LTD., Kadoma-shi, Osaka 571-0050 (JP)
(72) Inventor: FUTAMATA, Toshifumi, Tachikawa-shi, Tokyo 190-0013 (JP)
(74) Representative: Grünecker, Kinkeldey, Stockmair & Schwanhäusser Anwaltssozietät
(86) International application number: PCT/JP2002/012598
(87) International publication number: WO 2003/051023

(57) **Abstract**

A portable telephone of the present invention is provided with a memory (11) for storing thereinto such a plurality of functions which are arbitrarily selected from a large number of functions by manipulating an operation unit (10) as a plurality of functions displayed on a display device (2) under initial condition. In this portable telephone, a plurality of functions stored in the memory (11) are displayed on the display device (2) under initial condition, one function is selected from a plurality of displayed functions, and then, the selected function can be operated.

## Description

### TECHNICAL FIELD

The present invention is related to a portable telephone capable of setting displays as to a plurality of functions.

### BACKGROUND ART

Very recently, portable telephones may have not only telephone communications, but also a large number of functions such as the Internet, electronic mails, games, electronic calculators, schedule notebooks, and the like. Then, in order to realize these functions, assuming now that telephone communications are employed as an example, a large number of functions should be selected/adjusted, namely, telephone ringing sounds are selected; telephone ringing volume is adjusted; telephone calling notifications by vibrations are selected; telephone receiving volume is adjusted; telephone talking volume is adjusted, and so on. These portable telephones are also equipped with a very large number of functions capable of selecting/adjusting these items.

As a result, it is required to easily select/adjust one function from a large number of functions in the portable telephones. To this end, such portable telephones have been proposed in which a plurality of functions have been categorized in hierarchical groups. In this portable telephone, a plurality of functions belonging to an upper-grade hierarchical group are firstly displayed under initial condition. Next, when one of the plural displayed functions is selected, functions of the next hierarchical group related to the selected one function are displayed. Furthermore, when one of these displayed functions is selected, functions of the second next hierarchical group related to the above-described first next hierarchical group are displayed. As explained above, since the functions of the lower-grade hierarchical groups are sequentially displayed in the conventional portable telephones, a target function may be selected.

However, in the conventional telephones, either manufacturers or marketing dealers determine/fix that these functions are categorized in the hierarchical groups, or how the categorized functions are displayed in which sequential manner. As a result, users of these conventional portable telephones cannot change setting of the functions to be displayed.

As a consequence, in such a case that a function which is usually used many times is not contained in the upper-grade hierarchical group, the users of the conventional portable telephones must repeatedly display and select the functions from the upper-grade hierarchical group up to such a lower-grade hierarchical group where this usually-used function is contained every time the usually-used function is not contained. Furthermore, in the case that since the users do not use the portable telephones for a certain time, the users forget the method of selecting the target function, these users must repeatedly carry out the various operations, or must retry the various operations in order that even such a usually-used function is displayed, which may cause very difficult operations of these conventional portable telephones.

The present invention has been made to solve the above-explained conventional problems, and therefore, has an object to provide such a portable telephone having a superior characteristic and a simple construction, capable of selecting/setting a plurality of functions which can be arbitrarily displayed on a display device by a user under initial condition.

### DISCLOSURE OF THE INVENTION

A portable telephone of the present invention is comprised of a memory in which a plurality of functions displayed on a display device under initial condition are arbitrarily selected by manipulating an operation unit to store the arbitrarily-selected functions into this memory. Under the initial condition, the above-described plural functions stored in the memory are displayed on the respective display portions of the display device, one function is selected from the plural functions displayed on the display device by operating the operation unit, and then, this selected one function is carried out.

With employment of this structure, a user can arbitrarily select/set a plurality of functions which are displayed on the display device under initial condition. Since such functions which are usually used many times are selected/set as the functions to be displayed under initial condition, there is such an effect that the functions which are usually used many times can be quickly carried out in a simple manner with better operability.

Also, a portable telephone of the present invention is comprised of: a first memory in which a plurality of functions displayed on a display device under initial condition are arbitrarily selected by manipulating an operation unit to store the arbitrarily-selected functions into this memory; a second memory in which a plurality of functions displayed on the display device under the initial condition are automatically and sequentially selected in this order of such a function whose use frequency is high, and then the selected functions are stored in the second memory. While any one of the first memory and the second memory is selected, the plurality of functions stored in the selected memory are displayed on the respective display portions of the display device. One function is selected from the plural functions displayed on the display device by manipulating the operation unit, and then, this selected one function is executed.

With employment of this structure, the function whose use frequency is high may be used with a top priority, so that this portable telephone can become very useful to the user.

Also, the portable telephone, according to the present invention, is preferably arranged in such a manner that a display screen which is displayed on the display device under initial condition is constituted by "m" X "n" pieces of display portions, which is subdivided into "m" columns and "n" rows; and icons indicative of the respective functions are displayed on these display portions.

With employment of this construction, the above-described functions can be displayed in an easy manner by employing the icons, and further, the subdivided display portion can be selected at once by using the navigation key, and thus, the function related to this selected display portion can be executed.

Also, the portable telephone, according to the present invention, may be preferably arranged in that the large number of the above-described functions are categorized in the hierarchical groups; the numbers for specifying these functions are applied to the respective functions; and these numbers are stored in the above-explained memory in correspondence with the numbers of the display portions formed on the display device. Then, the content stored in the memory is read out under the initial condition; and the function stored in connection with the function number is displayed on the display portion having the corresponding display number of the display device.

With employment of this structure, the function displayed on the display device under the initial condition can be arbitrarily selected/set by merely defining the number of the display portion formed on the display device in correspondence with the number of the function which is wanted to be displayed. Therefore, the portable telephone can have such an effect that the desirable function can be selected/set in a very easy manner.

### BRIEF DESCRIPTION OF THE DRAWINGS

Fig. 1 is a front view for schematically indicating a portable telephone according to one embodiment mode of the present invention;
Fig. 2 is an electric schematic block diagram of the portable telephone according to the embodiment mode of the present invention;
Fig. 3 is an explanatory diagram for explaining a large number of functions of the portable telephone according to the embodiment mode of the present invention;
Fig. 4 is a diagram for showing an example of displays made on a display device of the portable telephone according to the embodiment mode of the present invention;
Fig. 5 is a diagram for indicating another example of displays made on the display device of the portable telephone according to the embodiment mode of the present invention; and
Fig. 6 is a flow chart for describing operations of the portable telephone according to the embodiment mode of the present invention.

### BEST MODE FOR CARRYING OUT THE INVENTION

Referring now to drawings, embodiment modes of the present invention will be described in detail.

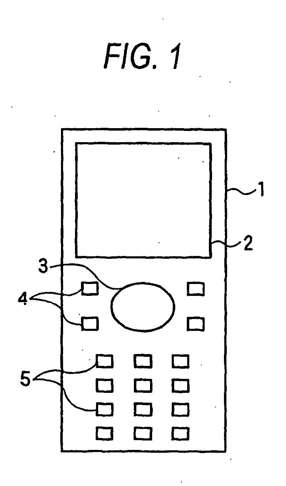

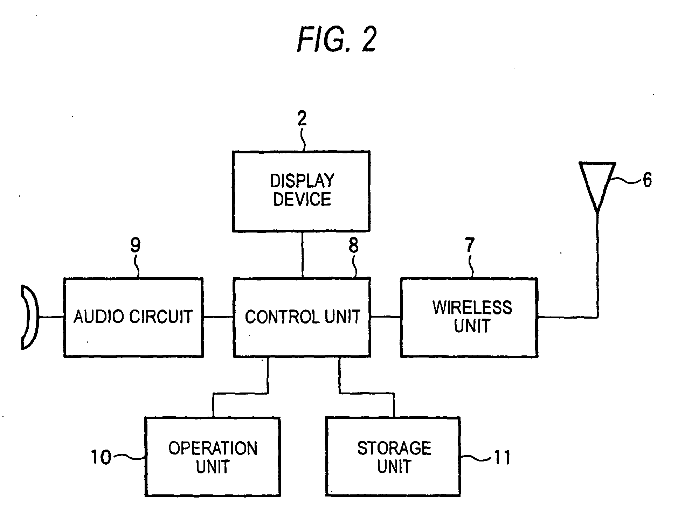

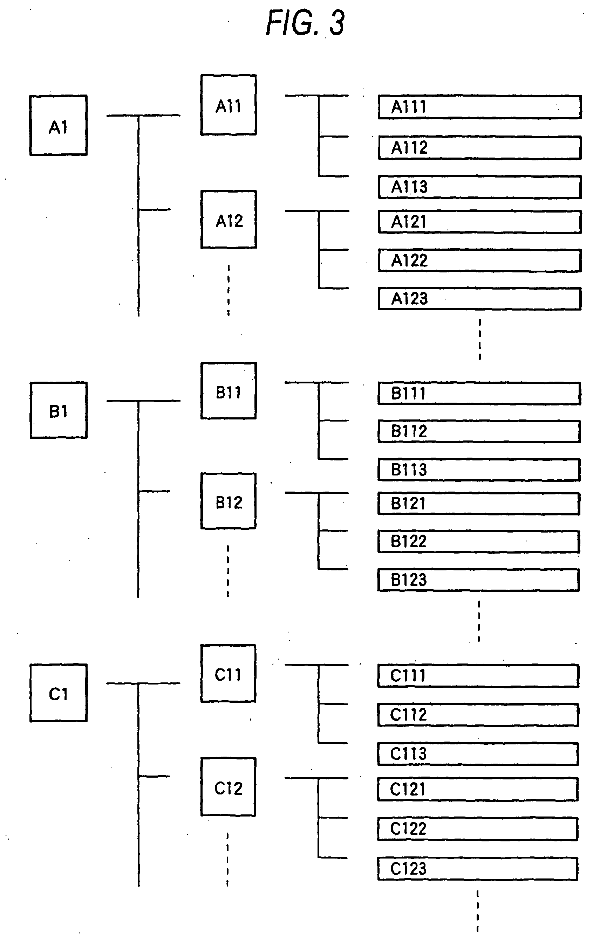

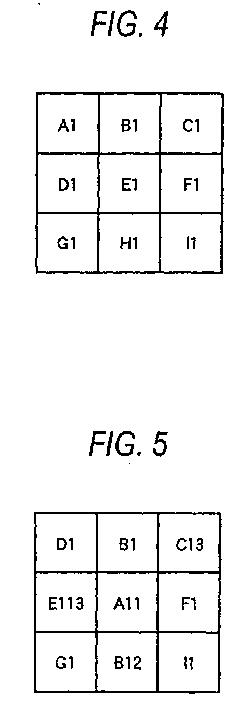

Fig. 1 is a front view for schematically indicating a portable telephone according to one embodiment mode of the present invention. Fig. 2 is an electric schematic block diagram of this portable telephone. Fig. 3 is an explanatory diagram for explaining a large number of functions of this portable telephone. Fig. 4 and Fig. 5 are diagrams for showing one example of displays made on a display device of the portable telephone.

In Fig. 1 and Fig. 2, reference numeral 1 shows a housing, reference numeral 2 indicates a display device, and reference numeral 3 represents a navigation key which can be manipulated along upper/lower/right/left/oblique directions. Reference numeral 4 shows function keys used to execute an ON/OFF function, an on-hook function, an off-hook function, and other functions. Also, reference numeral 5 indicates a ten-numeral entry key for entering telephone numbers, characters, symbols and the like. Furthermore, reference numeral 6 indicates an antenna, reference numeral 7 represents a wireless unit, reference numeral 8 shows a control unit, reference numeral 9 indicates a audio circuit unit, and reference numeral 10 represents an operation unit equipped with the navigation key 3, the function key 4, the ten-numeral entry key 5, and the like. Moreover, reference numeral 11 shows a storage unit.

The portable telephone according to this embodiment mode may execute a large number of functions in addition to the normal telephone function, for example, the Internet, electronic mails, games, schedule notebooks, and so on. These functions are categorized in accordance with hierarchical groups as shown in Fig. 3, while reference numerals for specifying various functions are applied to the respective functions. In this case, when reference numerals applied to functions are registered in a memory, or the like employed in the storage unit 11, address numbers thereof may be used.

As previously explained, in accordance with this embodiment mode, a large number of functions are categorized based upon the hierarchical groups. Under an initial condition (namely, telephone-call waiting condition after power supply has been turned ON, or under such a condition that selection of function is commenced from beginning), as represented in Fig. 4, displays made in the display device 2 are given as follows: A plurality of functions of the uppermost hierarchy, which have been previously determined by a manufacturer, are displayed.

In other words, as shown in Fig. 4, under the initial condition, while the display screen of the display device is subdivided into 3 columns X 4 columns, 9 (3 x 3 = 9) pieces of display portions are formed in total. Then, icons which indicate the uppermost hierarchical functions are displayed on these 9-divided display portions, respectively. As a result, in such a case that a lower hierarchical function is executed, such functions are sequentially selected and displayed from the uppermost hierarchical function which may cover this lower hierarchical function up to this lower hierarchical function. Thereafter, at a stage where the desirable function is displayed, this desirable function is selected to be determined, so that this desirable function may be carried out.

For instance, a description will now be made of such a case that a function "A112" (see Fig. 3) is executed. Under the initial condition, since the uppermost hierarchical function "A1" which covers this function "A112" is being displayed on the display device 2 (see Fig. 4), a user operates the navigation key 3 so as to select/determine the function "A1." As a consequence, the display shown in Fig. 4 is switched to displays of functions "A11", "A12", ---, of the next hierarchy. Next, the user operates the navigation key 3 so as to select/determine the function "A11." As a result, since functions A111, A112, A113, ---, are subsequently displayed, when the function of "A112" is selected/determined, the function of "A112" corresponding to the target function may be executed.

As previously explained, the function for covering the desirable function is selected to be determined among the uppermost hierarchical functions displayed under the initial condition, and then, the displayed function is sequentially advanced to the lower hierarchical functions, so that the desirable function may be displayed, and since the displayed desirable function is selected/determined, the desirable function may be carried out.

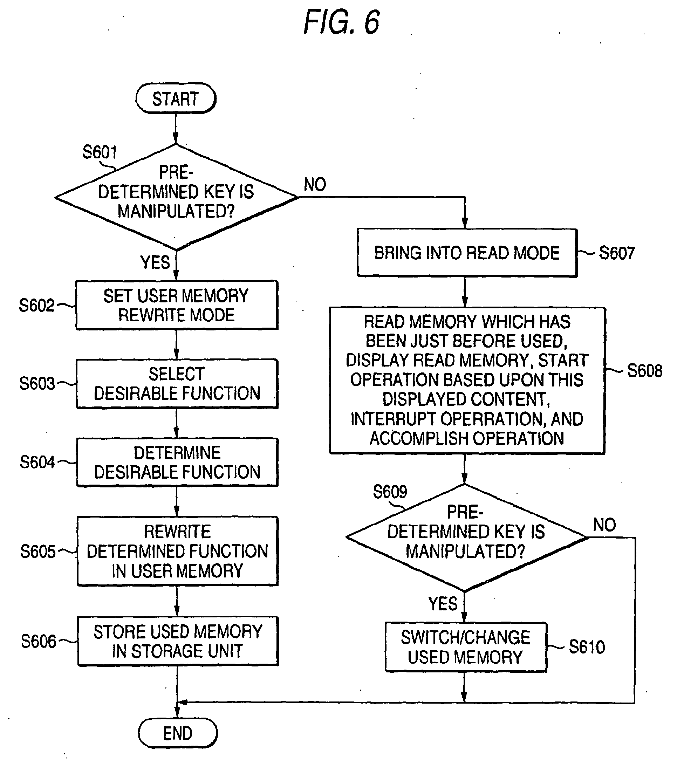

On the other hand, the portable telephone of this embodiment mode is further equipped with the below-mentioned function in addition to the above-explained function. In other words, since a predetermined key in the operation unit 10 is manipulated, the portable telephone is brought into such a condition that the display made on the display device 2 under initial condition can be changed. As a consequence, a function displayed on the display device 2 under initial condition can be arbitrarily selected and set by manipulating the operation unit 10. Then, the function selected/set in this case is registered in a user memory employed in the storage unit 11 independent from the functions which have been previously set by the manufacturer, and is arbitrarily read to be used.
Next, selecting/setting operations of the functions displayed under the initial condition will now be explained more in detail with reference to a flow chart shown in Fig. 6.

First, in a step 601 of this flow chart, when the predetermined key in the operation unit 10 is manipulated, this key operation is sensed by the control unit 8. Then, in a next step 602, the portable telephone is brought into such a condition that the display of the display device 2 under initial condition may be changed (namely, user memory rewrite mode). Under this condition, as indicated in a step 603, the functions are sequentially displayed in accordance with such a hierarchy which has been previously set/registered into the memory by the manufacturer, so that a desirable function is selected. In a step 604, when this desirable function is determined, this determined desirable function is rewritten into the user memory as a function which should be displayed under initial condition so as to be registered thereinto.

As a consequence, since the desirable functions are sequentially displayed in accordance with the above-explained hierarchy and are selected to be determined, these determined functions may be set/registered into the user memory which is separately provided with the memory for the functions which have been previously set/registered by the manufacturer and stored in the storage unit 11, while these determined functions are set/registered as functions displayed under the initial condition, respectively.

Although not shown in the drawing, in the user memory rewrite mode, since the functions under display are selected and a predetermined key is manipulated, the selected function may be deleted from the display made under initial condition.

As a consequence, nine pieces of functions which are wanted to be displayed under the initial condition may be selected/set at maximum by utilizing this deleted display portion. A display position of a selected/set function may be arbitrarily moved to a desirable display portion by using the navigation key 3. As a consequence, as shown in Fig. 5, in this embodiment mode, the desirable function may be arbitrarily displayed on the display device 2 under the initial condition, and the desirable function may be directly selected from this display, so that this selected function may be executed. Also, as indicated in Fig. 3, in this embodiment mode, while the respective functions are categorized in the hierarchical manner, the numbers for specifying the respective functions are applied to these functions. As a result, in the user memory rewrite mode capable of changing the display of the display device 2 under the initial condition, a predetermined key is manipulated. In response to such a key operation subsequent to the above-described key operation, the functions which are allocated/registered with respect to the respective display portions of the display of the display device 2 under the initial condition may be registered in the storage unit 11 in correspondence with the numbers for specifying these functions as well as the numbers for specifying the display portions.

As a consequence, in accordance with this embodiment mode, such a condition that the display under the initial condition is set to which function may be registered in the storage unit 11 in such a manner that the number of this function is registered in correspondence with the number of the display portion of the display device 2, while an instruction manual and the like are employed.

As previously explained, in accordance with this embodiment mode, in the step 601 shown in Fig. 6, a predetermined key is manipulated ("YES" of step 601). In the step 602, when the user memory rewrite mode is set, in the operation made after this step 602, the respective functions may be read from either the user memory or the memory of the functions which have been previously registered by the manufacturer, may be arbitrarily selected/determined in such a manner that the display under the initial condition registered in the user memory is set to which function. In the next step 605, this arbitrarily selected/determined function may be rewritten so as to be registered in the user memory. In the step 605, when the rewriting/registering operations of the user memory are accomplished, the rewritten user memory is stored into the storage unit 11 as a memory which has been just before used in the next step 606.

Furthermore, although not shown in the drawings, the portable telephone according to this embodiment mode may be equipped with a frequent-degree information memory, while frequent-degrees of executed functions are measured. This frequent-degree information memory automatically stores thereinto information as to the frequent-degrees of the functions in order that a plurality of functions are displayed on the display device 2 in this order from such a function which has been executed and owns a higher frequent-degree. Since the frequent-degree information memory is read out, a predetermined number of functions may be displayed on the display device 2 based upon the execution frequent-degrees of the functions.

As the memory which has been just before used in the step 606, such a memory which has directly stored the functions defined during manufacturing operation is being stored in the storage unit 11 during the manufacturing operation. However, in the case that the storage content of the user memory is rewritten/registered in the step 605, as previously explained, such a condition that this user memory is used is stored in this storage unit 11.

Next, a description will now be made of such a case that memories to be used are switched/changed. As will be explained in the below-mentioned description, in a step 610, in such a case that memories to be used are switched/changed, these memories which have been switched/changed are stored as the memories which have been just before used in the step 606 into the storage unit 11.

First of all, in the step 601, in such a case that a predetermined key is not manipulated (namely, "NO" of step 601), a read mode is set up in a step 607. In the next step 608, such a memory which was stored in the step 606 and has been just before used is read out from the storage unit 11, namely, any one of the user memory, the frequent-degree information memory, and the memory which has directly stored thereinto the functions defined during the manufacturing operation is read out from the storage unit 11. Then, the respective operations may be commenced, executed, interrupted, and accomplished based upon the displays of this read memory. Then, when the previously-determined keys are manipulated in a step 609 (namely, "YES" of step 609), the process operation is advanced to a further step 610. In this step, in response to this key manipulation, a memory to be used is switched to any one of the user memory, the frequent-degree information memory, and the memory which has directly stored thereinto the functions defined during the manufacturing operation. In the next step 606, the selected memory is stored into the storage unit 11 as the memory which has been just before used.

In such a case that the function display is not wanted to be changed, while the above-described predetermined key is not manipulated in the step 609, the function display is kept remained, or another key other than the predetermined key is manipulated ("NO" in step 609), so that the process operation is directly advanced to the step 606. In this step 606, the above-explained memory which has been used may be directly stored as the memory which has been just before used in the storage unit 11. In the step 608, the same memory is called, and the function display is not changed.

As previously described, in accordance with this embodiment mode, the functions to be displayed under the initial condition in response to the desires of the user can be freely set/registered in the user memory. These functions can be properly used in combination with the previously-registered functions by the manufacturer, which is very convenient with respect to the user.

As apparent from the above-described explanation, it should be understood that the user memory and the frequent-degree information memory need not be newly and separately provided. Alternatively, these memories may be arranged by employing a portion of such a memory to which the functions have been previously registered by the manufacturer. Also, in the embodiment mode, while the functions of all (namely, 9 in this embodiment) of the display portions are registered respectively in the user memory and the frequent-degree information memory, which can be displayed on the display device, these functions are separately displayed. Alternatively, such functions may be registered, the total number of which is equal to a total number of all of display portions which may be displayed one time on the display device in such a way that a total number of functions related to one of the user memory and the frequent-degree information memory is decreased smaller than the above-explained number, and also, a total number of functions related to the other of these memories is determined to compensate for this decreased number. In this alternative case, for instance, assuming now that a total number of functions which can be set/registered in the user memory is selected to be 6 and a total number of functions which can be automatically registered in the frequent-degree information memory is selected to be 3, 9 pieces of functions in total may be registered in the user memory.

Also, in this embodiment mode, nine pieces of the display portions constructed of 3 rows X 3 columns are formed. However, forming positions of these display portions and a total number of these display portions to be formed are not limited only to those of this embodiment mode.

While the present invention has been described in detail, or with reference to the specific embodiment modes, however, the present invention may be apparently modified, changed, and substituted without departing from the technical scope and spirit of the present invention by those skilled in the art.

The present invention has been made based upon Japanese Patent Application (Patent Application NO.2001-380035) filed on December 13, 2001, by incorporating the contents thereof as a reference.

### INDUSTRIAL APPLICABILITY

As previously explained, the present invention discloses such a portable telephone. That is, such a memory is employed, i.e., a plurality of functions which are displayed on the display device under the initial condition are arbitrarily selected from a large number of functions by operating the operation unit, and then the selected functions are stored into the memory. Under initial condition, the above-described plural functions stored in the memory are displayed on the respective display portions of the display device, one function is selected from the plural functions displayed on the display device by operating the operation unit, and then, this selected one function is carried out. The user can arbitrarily select/set a plurality of functions which are displayed on the display device under initial condition. Since such functions which are usually used many times are selected/set as the functions to be displayed under initial condition, there is such an effect that the functions which are usually used many times can be quickly carried out in a simple manner with better operability.

## Claims

1. A portable telephone comprising:
an operation unit for selecting a plurality of functions;
a display device for displaying a plurality of functions under initial condition; and
a first memory for storing thereinto the functions selected by the operation unit as a plurality of functions which are displayed on the display device under the initial condition,
wherein said display device displays the functions stored in said first memory under initial condition.

2. The portable telephone according to Claim 1, further comprising:
a second memory for sequentially storing thereinto the functions in this order of such functions whose use-frequencies are high,
wherein, while any one of said first memory and said second memory is selected, said plurality of functions stored in said selected memory are displayed on the respective display portions of said display device.

3. The portable telephone according to Claim 1, further comprising:
a second memory for sequentially storing thereinto the functions in this order of such functions whose use-frequencies are high,
wherein said display device displays thereon both a predetermined number of the functions stored in said first memory and a predetermined number of the functions stored in said second memory.

4. The portable telephone according to Claim 1,
wherein a display screen which is displayed on the display device under initial condition is constituted by "m" X "n" pieces of display portions, which is subdivided into "m" columns and "n" rows; and icons indicative of the respective functions are displayed on these display portions.

5. The portable telephone according to Claim 1,
wherein said plurality of functions are categorized in hierarchical groups,
wherein said plurality of functions own function numbers for specifying the respective functions,
wherein said display device owns a plurality of display portions,
wherein said plurality of display portions own display numbers, respectively,
wherein said first memory stores thereinto said function numbers and said display numbers in correspondence with each other,
wherein the content stored in said first memory is read out under the initial condition, and
wherein the function stored in connection with the function number is displayed on said display portion having the corresponding display number of said display device.
